Europäisches Patentamt

European Patent Office

Office européen des brevets

(19)

(11) Numéro de publication: **0 338 953**
A1

# DEMANDE DE BREVET EUROPEEN

(12)

(21) Numéro de dépôt: **89420146.6**

(22) Date de dépôt: **20.04.89**

(51) Int. Cl.⁴: **B 67 B 3/06**
**B 23 Q 7/00**

(30) Priorité: **21.04.88 FR 8805552**

(43) Date de publication de la demande:
**25.10.89 Bulletin 89/43**

(84) Etats contractants désignés:
**AT BE CH DE ES FR GB GR IT LI LU NL SE**

(71) Demandeur: **"FRANCOIS VALENTIN" Société dite**
**27, rue de Reims**
**F-51200 Epernay (FR)**

(72) Inventeur: **Valentin, Jean**
**Beaurepaire Festigny**
**F-51200 Epernay (FR)**

**Chassefiere, Bernard**
**Chemin Grange aux Bois Chavot-Courcourt**
**F-51200 Epernay (FR)**

**Metzger, Bernard**
**21, Avenue de Champagne**
**F-51200 Epernay (FR)**

**Suply, Patrick**
**8, rue Jeanne Jugan**
**F-51100 Reims (FR)**

**Dugas, Claude**
**17, rue du Puits Rond**
**F-51200 Epernay (FR)**

**Mangeot, Robert**
**25, ruelle des Soeurs Cumières**
**F-51200 Epernay (FR)**

**Pesa, Yannick**
**Vouzy**
**F-51130 Vertus (FR)**

(74) Mandataire: **Karmin, Roger et al**
**Cabinet MONNIER 150, Cours Lafayette**
**F-69003 Lyon (FR)**

(54) Dispositif pour amener successivement des articles en vis-à-vis d'organes se déplaçant suivant un trajet déterminé.

(57) Il comprend une plaque fixe (1) dans laquelle est creusée une rainure (11) pourvue d'une rampe (11a) de forme homothétique à celle du tronçon S du trajet des bouteilles (7).

Un plateau (3) comporte au moins une fourche (31, 32) et au moins un bras de distribution (4) coulissant par l'une de ses extrémités le long de l'ouverture (33) de la fourche. Son extrémité opposée comportant deux galets (43) coopérant avec la rainure (11) est aussi déplacée le long de la rainure. Les rotations en sens inverse du plateau (3) et de la museleuse (6) sont synchronisées pour que la trajectoire du support du muselet (44) soit juxtaposée au trajet des bouteilles (7) dans le tronçon S.

Fig.1

EP 0 338 953 A1

**Description**

La présente invention est relative à un dispositif propre à amener successivement des articles en vis-à-vis d'organes se déplaçant suivant un trajet déterminé et il se rapporte plus particulièrement, bien que non exclusivement, à la présentation de muselets devant les têtes d'une machine à poser de tels organes sur les bouchons de bouteilles renfermant un liquide pétillant tel que le champagne.

On sait que les bouchons de bouteilles renfermant des liquides pétillants sont associés à des muselets, c'est-à-dire à des organes réalisés en fil de fer et qui sont destinés à solidariser ledit bouchon au col de la bouteille. Bien entendu, la pose desdits muselets doit se faire automatiquement à la même cadence que le bouchage et le remplissage.

Jusqu'à présent, la distribution des muselets dans les têtes de la machine à museler s'effectue à partir d'un distributeur extérieur à ladite machine et qui comporte essentiellement une trémie de stockage des muselets qui sont amenés un à un dans des cuvettes constituant les maillons d'une chaîne qui vient passer sous les têtes de la machine à museler. On comprend aisément que cette chaîne est flottante de sorte que la précision du positionnement des muselets qu'elle porte laisse à désirer. De plus elle constitue une gêne considérable puisqu'elle entoure pratiquement toute la machine à museler. Enfin la complexité de la distribution des muselets est telle que le coût de l'opération de muselage est très largement grevé par celui du distributeur de muselets.

Les perfectionnements qui font l'objet de la présente invention visent à remédier aux inconvénients précités et à permettre la réalisation d'un dispositif d'amenée des muselets en vis-à-vis des têtes de mise en place qui soit situé à l'extérieur du trajet de ces têtes en dehors d'un tronçon de faible longueur suivant lequel ledit dispositif présente successivement les muselets en vis-à-vis des têtes à vitesse relative nulle.

A cet effet, le dispositif suivant l'invention comprend :
- une plaque fixe dans laquelle est ménagé un chemin de roulement dont le profil comporte une rampe de forme homothétique à celle d'un tronçon du trajet des têtes ;
- un plateau tournant à au moins une fourche ;

- au moins un bras de distribution d'un article coulissant par l'une de ses extrémités le long de l'ouverture de la fourche et guidé par son extrémité opposée par le chemin de roulement de la plaque fixe, ledit bras étant pourvu d'un support d'article.

Le dessin annexé, donné à titre d'exemple, permettra de mieux comprendre l'invention, les caractéristiques qu'elle présente et les avantages qu'elle est susceptible de procurer :

Fig. 1 est une vue par dessus d'un dispositif suivant l'invention.

Fig. 2 est une vue éclatée partielle des principaux éléments d'un dispositif conforme à l'invention.

Fig. 3 est une coupe transversale d'un dispositif suivant l'invention montrant le transfert d'un muselet vers sa tête de mise en place sur une bouteille. On y a représenté en I-I le plan de coupe de fig. 1.

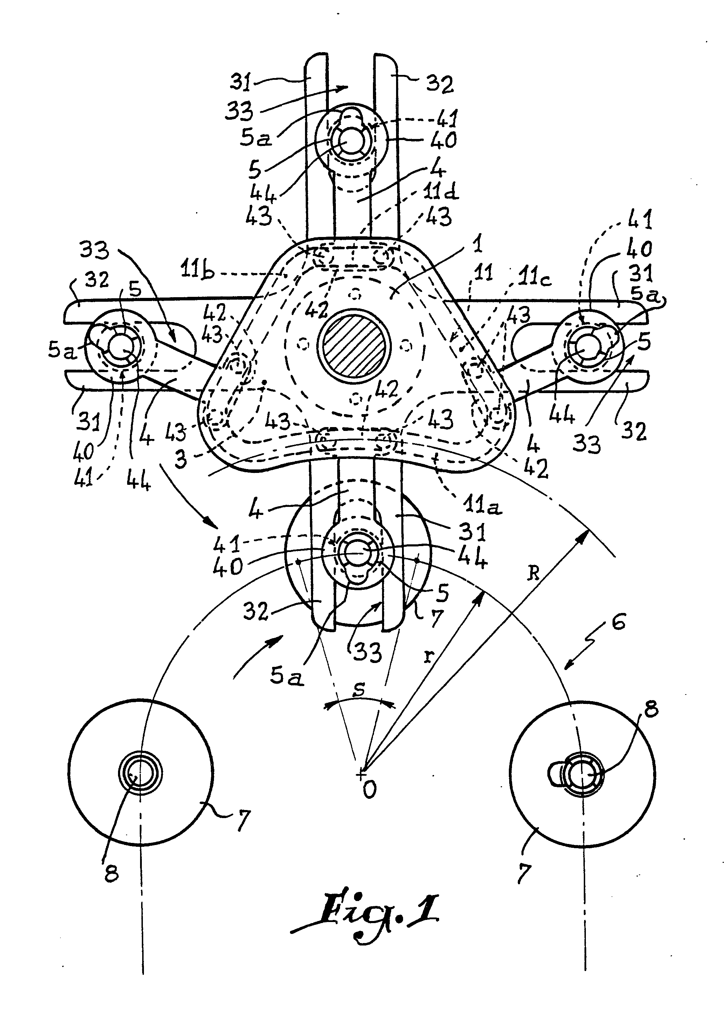

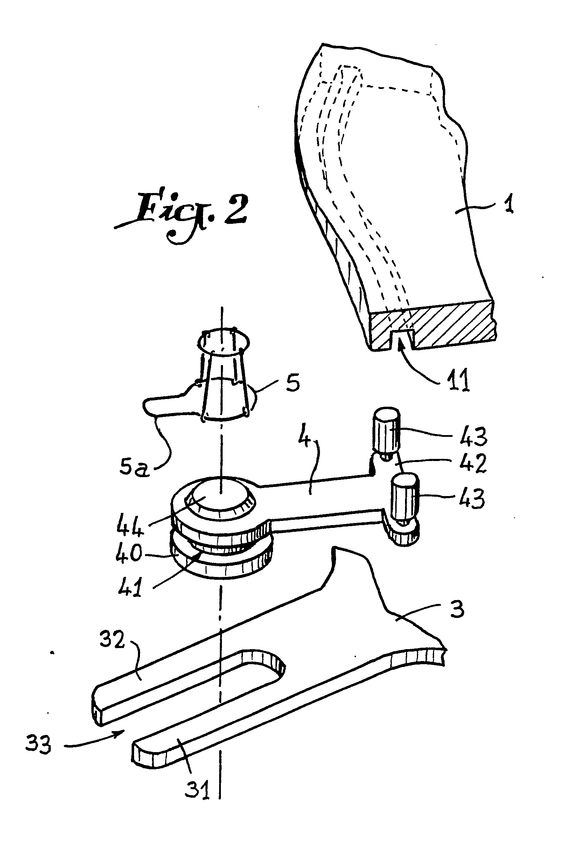

Le dispositif suivant l'invention illustré en fig. 1 à 3 comprend essentiellement une plaque fixe 1, par exemple solidaire du bâti 2 du dispositif en question. Ce dernier comprend en outre un plateau 3 réalisé, dans le mode d'exécution décrit, au moyen de quatre fourches orientées à 90° les unes par rapport aux autres. Chaque fourche comporte deux branches 31, 32 déterminant entre elles un espace radial 33 à bords parallèles à l'axe géométrique de la fourche en question.

Le dispositif suivant l'invention comprend enfin autant de bras 4 que de fourches. L'une des extrémité de chaque bras est pourvue d'un patin inférieur 40 réalisé avantageusement sous la forme d'une rondelle circulaire pourvue d'une gorge périphérique 41 dans laquelle s'engagent les deux branches 31, 32 de chaque fourche, le diamètre intérieur de la gorge 41 étant bien entendu égal au jeu de fonctionnement près à l'écartement des bords en vis-à-vis de ces dernières qui constituent l'espace 33. Ainsi, la coopération du patin 40 avec la fourche permet le maintien horizontal du bras 4 considéré. L'extrémité opposée de chaque bras 4 est munie d'une traverse 42 dépassant légèrement de part et d'autre dudit bras et dont les deux bouts portent chacun un galet 43 à axe vertical et s'élevant au-dessus du bras 4, c'est-à-dire en sens inverse de la rondelle 40. L'extrémité portant cette dernière est épanouie et elle porte sur sa face opposée à ladite rondelle 40 un bossage 44 servant de support à l'article 5, c'est-à-dire dans le présent cas le muselet, qui doit être distribué au moyen du dispositif suivant l'invention.

On observe que la face inférieure de la plaque fixe 1 est pourvue d'une gorge 11 comportant en vis-à-vis de la machine à museler schématisée par un cercle 6 en traits discontinus de centre 0, une rampe 11a de rayon R ayant pour son origine le point 0 précité, de telle sorte que ladite rampe 11a est homothétique au cercle de rayon r illustrant en fait la trajectoire des bouteilles 7 sur la machine à museler. La gorge 11 comporte des parties rectilignes 11b, 11c orientées obliquement et une partie 11d également rectiligne et située en face de la rampe 11a.

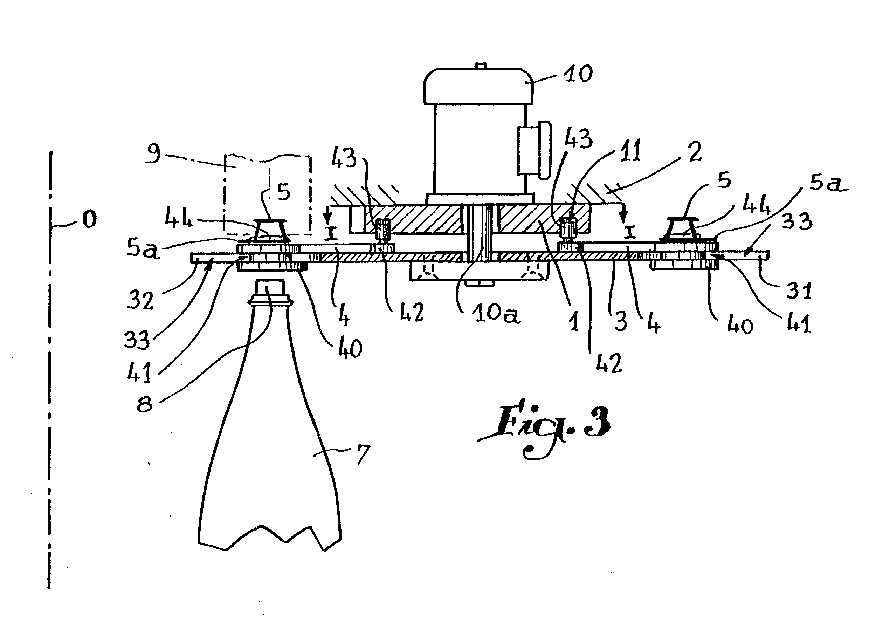

On a illustré en fig. 1 la position de trois bouteilles 7 tournant sur la machine 6 dans le sens horaire, la position de gauche représentant une bouteille 7 munie de son bouchon 8, mais sans muselet. Au centre, on a représenté un secteur S dont l'arc correspond au tronçon court du trajet des bouteilles dans lequel le muselet doit être transféré à la tête de muselage 9 (fig. 3). La position de droite de la bouteille 7 la représente après que son muselet ait été placé sur le bouchon. Dans une position ultérieure non représentée, la boucle 5a du muselet est tortillée à la manière connue.

Le plateau 3 est calé sur l'arbre de sortie 10a d'un moteur électrique 10 qui entraîne la rotation dudit plateau à la vitesse désirée. Fig. 3 montre également que les galets 43 des bras 40 sont engagés dans la rainure 11 de la plaque 1.

Le fonctionnement découle des explications qui précèdent :

La rotation du plateau 3 provoquée par le moteur 10 entraîne le déplacement subséquent de chaque bras 4 autour du plateau 1, ce qui oblige la traverse 42 à suivre la forme de la rainure 11 puisque les galets 43 sont engagés dans celle-ci. En particulier, le long de la rampe 11a, le bras 4 situé dans cette zone décrit d'une part au niveau de ses galets une circonférence de rayon R dont le centre 0 est le même que celui du trajet circulaire suivant lequel se déplacent les bouteilles 7 et d'autre part, au niveau de son support 44, une trajectoire circulaire de rayon r du fait que la longueur du bras est telle que l'axe géométrique de son support 44 est choisi pour remplir cette condition. Le support 44 de chaque bras 4 se déplace donc dans le secteur S considéré de la machine à museler suivant une trajectoire coïncidant avec le lieu géométrique ou trajet des têtes 9 de cette machine. Bien entendu, pour ce faire, d'une part la vitesse du plateau 3 est synchrone avec celle de rotation de la machine à museler 6 et d'autre part le sens de rotation des deux mécanismes est inverse, de telle sorte que l'engrènement dans le secteur S s'effectue comme indiqué précédemment.

Dans la partie 11d de la rainure 11 qui est rectiligne, l'on peut aisément placer automatiquement le produit à distribuer, c'est-à-dire le muselet 5, sur le bossage 44 en orientant son anneau de tortillage 5a vers l'extérieur, afin qu'il puisse être saisi par le doigt de tortillage usuel de la machine à museler 6 au moment opportun.

**Revendications**

1. Dispositif pour amener successivement des articles (5) en vis-à-vis de têtes (9) se déplaçant suivant un trajet déterminé (6), caractérisé en ce qu'il comprend des moyens (1, 3, 4) de présenter successivement lesdits articles suivant une certaine trajectoire juxtaposée au trajet des têtes (9) à vitesse relative nulle et sur un certain tronçon court (S) dudit trajet correspondant à l'engrènement de ce dernier et de la trajectoire, lesdits moyens étant situés pour leur plus grande part à l'extérieur du trajet des têtes (9) et tournant en sens inverse de celui de ces dernières.

2. Dispositif suivant la revendication 1, caractérisé en ce qu'il comprend :
- une plaque fixe (1) dans laquelle est ménagé un chemin de roulement (11) dont le profil comporte une rampe (11a) de forme homothétique à celle du tronçon (S) du trajet des têtes (9) ;
- un plateau (3) à au moins une fourche (31, 32) entraîné en rotation ;
- au moins un bras de distribution (4) d'un article (5) coulissant par l'une de ses extrémités le long de l'ouverture (33) de la fourche (31, 32) et guidé par son extrémité opposée par le chemin de roulement (11) de la plaque fixe (1), ledit bras (4) étant pourvu d'un support d'article (44), la vitesse de rotation du plateau (3) étant telle que la vitesse linéaire du support d'article (44) du bras (4) dans le tronçon (S) est la même que celle des têtes (9) dans ce tronçon (S).

3. Dispositif suivant la revendication 2, caractérisé en ce que chaque bras de distribution (4) comporte sous le support d'article un patin (40) pourvu d'une gorge périphérique (41) dans laquelle s'engagent à coulissement les bords intérieurs des branches (31, 32) de la fourche, en vue de maintenir le bras (4) horizontal.

4. Dispositif suivant la revendication 3, caractérisé en ce que le bras (4) est pourvu d'une traverse (42) portant deux galets (43) coopérant avec le chemin de roulement de la plaque fixe (1), qui est réalisé au moyen d'une rainure (11) pratiquée dans sa face inférieure.

5. Dispositif suivant la revendication 4, caractérisé en ce que la longueur du bras (4) est telle que l'axe géométrique de son support d'article (44) se déplace sur le lieu géométrique des têtes (9) dans le tronçon (S) précité.

6. Dispositif suivant la revendication 2, caractérisé en ce que le chemin de roulement (11) présente au moins une partie rectiligne (11d) permettant de déposer l'article (5) sur son support (44) prévu sur le bras (4).

7. Dispositif suivant l'une quelconque des revendication 2 à 6, caractérisé en ce que son plateau tournant (3) comprend quatre fourches.

8. Dispositif suivant la revendication 7, caractérisé en ce qu'il est destiné à amener successivement des muselets (5) sous les têtes (9) d'une machine rotative à museler (6) successivement des bouchons (8) sur des bouteilles (7) de liquide pétillant, son plateau à fourche (3) tournant dans le sens inverse de celui de la machine à museler (6).

*Fig.1*

*Fig. 2*

**Fig. 3**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 515 153 (RISVIN)<br>* Page 2, ligne 18 - page 3, ligne 13; page 4, lignes 2-11; page 5, lignes 26-37; page 6, lignes 25-33; page 7, lignes 23-29; page 9, ligne 36 - page 10, ligne 25; figures 3-5 *<br>--- | 1,2,6 | B 67 B  3/06<br>B 23 Q  7/00 |
| A | FR-A-2 478 614 (ETABLISSEMENTS F. VALENTIN)<br>--- | 8 | |
| A | US-A-3 241 688 (J.S. LAIRD et al.)<br>----- | | |

DOMAINES TECHNIQUES RECHERCHES (Int. Cl.4)

B 67 B
B 23 Q
B 21 D
B 23 P
B 65 G

Le présent rapport a été établi pour toutes les revendications

| Lieu de la recherche | Date d'achèvement de la recherche | Examinateur |
|---|---|---|
| LA HAYE | 12-07-1989 | VAN DEN BOSSCHE E.J.N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)